# EUROPÄISCHE PATENTSCHRIFT

(11) **EP 3 152 171 B1**
(45) Veröffentlichungstag und Bekanntmachung des Hinweises auf die Patenterteilung: **18.12.2019**
(21) Anmeldenummer: 15725500.1
(22) Anmeldetag: 30.05.2015
(51) Int. Cl.: C03B 7/16

(54) **RINNENSYSTEM FÜR EINE I.S.-MASCHINE**
GUTTER SYSTEM FOR AN IS MACHINE
SYSTÈME DE GOULOTTES POUR MACHINE À SECTION INDIVIDUELLE

(30) Priorität: 05.06.2014 DE 102014008006
(43) Veröffentlichungstag der Anmeldung: 12.04.2017
(73) Patentinhaber: Heye International GmbH, 31683 Obernkirchen (DE)
(72) Erfinder: ULBRICHT, Jonas, 31840 Hessisch Oldendorf (DE); MÖLLER, Eckhard, 31683 Obernkirchen (DE); FELGENHAUER, Benedikt, 32049 Herford (DE)
(74) Vertreter: Sobisch, Peter
(86) Internationale Anmeldenummer: PCT/EP2015/001099
(87) Internationale Veröffentlichungsnummer: WO 2015/185200

(56) Entgegenhaltungen:
- US-A- 5 298 049
- US-A- 5 599 370
- US-A- 5 935 287
- US-A1- 2008 028 796

## Beschreibung

Die Erfindung bezieht sich auf ein Rinnensystem entsprechend dem Oberbegriff des Anspruchs 1.

Ein solches Rinnensystem ist dazu bestimmt, die aus einem Tropfenspeiser austretende durch Zerteilen eines Stranges in Tropfenform vorliegende schmelzflüssige Glasmasse in eine Form, nämlich die Vorform einer I.S.-Maschine zu überführen, in der der eigentliche Glasformungsprozess beginnt. Das Rinnensystem besteht aus wenigstens einer um eine vertikale Achse drehbar gehaltenen Scooprinne, einem mehrere rinnenartige Gleitkörper aufweisenden Gleitsystem bzw. Führungsplatten, einer der Anzahl der Gleitkörper entsprechenden Anzahl Langrinnen und jeweils einer, sich an eine Langrinne anschließenden, zum zentrischen Einführen eines Glastropfens in eine Vorform bestimmten Endrinne. Die Anzahl der Gleitkörper, Lang- und Endrinnen entspricht der Anzahl der Stationen multipliziert mit der Anzahl der Kavitäten der I.S.-Maschine, wobei durch Drehung der Scooprinne die gebildeten Glastropfen nacheinander auf die unterschiedlichen Gleitsysteme überführt werden.

Das Rinnensystem kann beispielsweise für einen Einfachtropfenbetrieb eingerichtet sein, bei dem in jeder der Stationen der I.S.-Maschine nur eine Vorform beschickt wird. Es kann jedoch auch für einen Zweifach- oder Dreifachtropfenbetrieb eingerichtet sein, so dass dementsprechend in jeder der Stationen zwei oder drei Vorformen zu beschicken sind. In den beiden letztgenannten Fällen werden ausgehend von dem Tropfenspeiser zwei oder drei Scooprinnen beschickt, deren jeweilige Gleitpfade in die Gleitkörper von zwei bzw. drei versetzt übereinander angeordneten Gleitsystemen bzw. Führungsplatten einmünden, wobei die Glastropfen anschließend über eine entsprechende Anzahl von Langrinnen und Endrinnen in die ihnen jeweils zugeordnete Vorform überführt werden.

Die Scooprinne / Scooprinnen ist / sind um jeweilige vertikale Achsen drehbar, im Übrigen jedoch maschinenfest angeordnet. Die Gleitsysteme sind jeweils an sich horizontal erstreckenden Armen einer Konsole befestigt, die ihrerseits von einem maschinenfest angeordneten Scoopbalken getragen wird. Die Langrinnen sind an ihren oberseitigen, das heißt den Gleitkörpern zugekehrten Enden horizontal und vertikal einstellbar an den jeweiligen Gleitsystemen befestigt, ihre jeweiligen unterseitigen Enden sind einstellbar gegenüber den zugekehrten Enden der Endrinnen gehalten. Die Endrinnen schließlich sind über vertikale und horizontale Einstelleinrichtungen an einer maschinenfest angeordneten Konsole gehalten. Es sind somit mehrere Einstellmöglichkeiten vorgesehen, um eine Kontinuität der Gleitbahnen, eine Überhöhung des Gleitbahnabschnitts der Scooprinne gegenüber dem nachfolgenden Gleitkörper sowie desjenigen des Gleitkörpers gegenüber der Langrinne und schließlich der Endrinnen mit Hinblick auf ein zentrisches Einführen der Glastropfen in die Vorform vorgesehen. Die Einstellmöglichkeiten sind konstruktiv durch teilweise in Langlöchern geführte Schraubverbindungen, Kugelkopflagerungen sowie Gewindespindeln in Verbindung mit Kettengetrieben dargestellt. Die Bereitstellung einer bestimmten, durch relativ zueinander justierte Komponenten festgelegten Gleitbahn für die Glastropfen ist von wesentlicher Bedeutung für ein reproduzierbares Arbeitsergebnis.

Aus Gründen der Rentabilität besteht bisweilen ein Bedürfnis, eine bisher für einen Einfachtropfenbetrieb eingerichtete I.S.-Maschine für einen Zwei- oder auch Dreifachtropfenbetrieb umzurüsten. Mit Hinblick auf den hiermit einhergehenden Arbeitsaufwand, insbesondere den zu erwartenden Zeitbedarf und die hiermit in Verbindung stehenden Maschinenstillstandszeiten wird hiervon jedoch nur selten Gebrauch gemacht. Denn ein solcher Wechsel macht einen Ausbau bzw. ein Auswechseln der die Endrinnenverstellungen tragenden Konsole sowie der die zur Halterung des / der Gleitsysteme bestimmten Arme tragenden Konsole erforderlich, wobei mit dem Einbau umfassende Justierarbeiten verbunden sind, die auf die Einrichtung einer definierten Gleitbahn für die Glastropfen gerichtet sind.

Ein derartiges Rinnensystem ist beispielsweise aus dem EP 0 654 451 B1 sowie der US 5 599 370 A bekannt.

Ein weiteres Rinnensystem ist aus dem DE 295 08 465 U1 bekannt. Hierbei wird auf die Benutzung einer Langrinne verzichtet, so dass sich an das / die Gleitsysteme unmittelbar die Endrinne / die Endrinnen anschließen. Die Befestigung der Endrinnen ist im Vergleich mit derjenigen gemäß dem EP 0 654 451 zusätzlich durch eine, ein Spindelgetriebe einbeziehende Höhenverstellung gekennzeichnet, wobei die Gleitsysteme wiederum über die Arme einer Konsole an einem Scoopbalken maschinenfest angeordnet ist. Einstellbar, insbesondere mit Hinblick auf eine Überhöhung ist auch die Verbindung zwischen den unteren Enden der Gleitsysteme sowie den diesen zugekehrten oberen Enden der Endrinnen.

Die Komplexität der Umrüstarbeiten, die mit einem Wechsel beispielsweise von einem Einfachtropfenbetrieb auf einen Mehrfachtropfenbetrieb verbunden ist, gestaltet sich jedoch gleichermaßen groß.

Es ist die Aufgabe der Erfindung, ein Rinnensystem der eingangs bezeichneten Gattung mit Hinblick auf eine Vereinfachung von Umrüstarbeiten, die mit einem Wechsel von einem Einfachtropfen- auf einen Mehrfachtropfenbetrieb und umgekehrt verbunden sind, zu verbessern. Gelöst ist diese Aufgabe bei einem solchen Rinnensystem durch die Merkmale des Kennzeichnungsteils des Anspruchs 1.

Erfindungswesentlich ist hiernach, dass die Führungsplattenbaugruppe in eine erste, unmittelbar am Maschinenrahmen befestigte Baugruppe und eine zweite, als Träger der Führungsplatten konzipierte Baugruppe unterteilt ist. Die erste dieser beiden Baugruppen ist in einer definierten, durch die darzustellenden Gleitbahnen für schmelzflüssige Glastropfen bestimmten Position am Maschinenrahmen fest angeordnet und dient gleichzeitig der Darstellung einer standardisierten Anhänge- oder auch Einschiebeposition für die zweite Baugruppe. Diese Ausgangslage ermöglicht einen einfachen Wechsel beispielsweise von einem Doppelform- auf einen Dreifachformbetrieb und umgekehrt, indem lediglich die zweite der beiden Baugruppen entfernt und durch eine andere ersetzt wird, nachdem die erste Baugruppe zum montagemäßigen Zusammenwirken mit unterschiedlichen zweiten Baugruppen eingerichtet ist. Dies bedeutet, dass bei einem solchen Wechsel die erste der beiden Baugruppen in jedem Fall unverändert an dem Maschinenrahmen verbleibt. Bei einem Wechsel beispielsweise von einem Doppeltropfen- auf einen Dreifachtropfenbetrieb wird eine Führungsplatte entfernt, wobei zwei weitere Führungsplatten auf vorbereitete Positionen innerhalb der zweiten Baugruppe geschoben und in den endgültigen Montagepositionen mit Stiften abgesteckt werden. Auf diese Weise ist eine beträchtliche Einsparung an Arbeitsaufwand gegeben, der ansonsten mit einer solchen Umrüstung verbunden ist.

Auch die Endrinnenbaugruppe ist in zwei Baugruppen unterteilt, von denen eine erste zur festen Verbindung mit einem Maschinenrahmen und eine zweite zum einfachen Austauschen im Fall eines Wechsels beispielsweise von einem Doppelform- auf einen Dreifachformbetrieb oder umgekehrt eingerichtet ist. Mit der ersten Baugruppe wird wiederum eine definierte, nach Maßgabe der darzustellenden Gleitbahnen für schmelzflüssige Glastropfen eingerichtete Montageposition bereitgestellt, während der Zweck der zweiten Baugruppe darin besteht, das unmittelbare Bindeglied für die zu tragenden Langrinnen zu bilden.

Die zweite Baugruppe der Führungsplattenbaugruppe besteht aus einer einheitlich zwecks Umrüstens der Glasformmaschine handhabbaren Führungsplatteneinheit, die im einfachsten Fall aus zwei seitlichen, als Träger der Führungsplatten konzipierten Tragabschnitten besteht. Diese Führungsplatteneinheit kann entsprechend der Darstellung beispielsweise eines Doppel- oder eines Dreifachformbetriebes mit einer unterschiedlichen Anzahl an Führungsplatten ausgerüstet sein, wobei jedoch stets eine standardisierte Schnittstelle zur Anbindung an die erste der beiden Baugruppen der Führungsplattenbaugruppe bereit gestellt ist.

Die Merkmale der Ansprüche 2 und 3 sind auf die weitere Ausgestaltung der genannten ersten Baugruppen gerichtet. Wesentlich ist, dass diese über eine definierte Schnittstelle zur Anbindung der genannten zweiten Baugruppen verfügen, welche Schnittstelle durch Einschieb- oder Aufsteckpositionen oder auch sonstige Montagepositionen gekennzeichnet ist, welche an die Darstellung der unterschiedlichen Standards eines Einfach-, Doppel-, Dreifach- oder Mehrfachtropfenbetriebes angepasst sind und mit der Maßgabe konzipiert sind, dass der mit derartigen Umrüstarbeiten verbundene Aufwand im Vergleich zu dem eingangs dargelegten Stand der Technik gering gehalten werden kann.

Die Merkmale der Ansprüche 4 und 5 sind auf eine weitere konstruktive Ausgestaltung der beiden Baugruppen der Führungsplattenbaugruppe gerichtet. Diese bestehen jeweils aus seitlichen Tragabschnitten, die an den einander zugekehrten Seiten, jeweils eine Schnittstelle zwischen beiden Baugruppen bildend, über Anschlussplatten bzw. Abschlussplatten in Verbindung stehen, wobei die Montageposition beider Baugruppen miteinander beispielsweise durch eine Verschraubung gesichert ist. Die Tragabschnitte der zweiten Baugruppe sind gleichzeitig Träger der an diesen angebrachten Führungsplatten, wobei eine Montageseite der Tragabschnitte vorzugsweise unter einem Abdeckblech gegenüber Umgebungseinflüssen geschützt angeordnet ist.

Die Merkmale der Ansprüche 6 und 7 sind auf die Ausgestaltung der beiden Baugruppen der Endrinnenbaugruppe gerichtet. Die erste dieser beiden Baugruppen ist mit Auslegern versehen, die sich senkrecht zu einer Konsole erstrecken und mit standardisierten Montagepunkten, insbesondere Steckpositionen oder sonstigen Montagepositionen zur Aufnahme und Fixierung der jeweils als säulenartige Tragelemente ausgestalteten zweiten Baugruppen ausgerüstet sind. Die Montagepunkte können nach Maßgabe standardisierter Maße eines Einfach-, Doppel-, Drei- oder Mehrfachtropfenbetriebes eingerichtet sein.

Die Merkmale des Anspruchs 8 bringen den Vorteil mit sich, dass eine Wurfüberhöhung beim Übergang von einer Scooprinne auf die Führungsplatte oder beim Übergang von der Scooprinne in eine Langrinne einstellbar ist. Auf diese Weise entfallen Längenanpassungen über Zwischenringe zum Tropfenverteiler. Schließlich kann die so einstellbare Wurfüberhöhung an besondere Situationen eines wannenseitigen Tropfenfalls angepasst werden. Die hiermit einhergehende Änderung der Höhenposition gegenüber unteren Teilen des Rinnensystems wie Lang- und Endrinnen fällt demgegenüber nicht ins Gewicht.

Diese Tragelemente sind entsprechend den Merkmalen der Ansprüche 9 und 10 zur Darstellung einer Höhenverstellung für die Montagepunkte eingerichtet, wobei an einem Tragelement jeweils zwei Montagepunkte mit Abstand übereinander angeordnet sind. Die dieser Höhenverstellung zugrundeliegende Form eines Hubspindeltriebes ist als solche bekannt und wird deshalb an dieser Stelle nicht näher beschrieben.

Die Höhenverstellung der genannten Montagepunkte kann manuell eingerichtet sein. Besonders vorteilhaft ist es entsprechend den Merkmalen des Anspruchs 11, dieser Höhenverstellung einen motorischen, insbesondere einen elektrischen Antrieb zuzuordnen. Hierbei ist ein jedes der Tragelemente mit einem solchen Antrieb ausgerüstet, wobei diese Antriebe vorzugsweise unabhängig voneinander steuerbar sind.

Die Merkmale der Ansprüche 12 und 13 sind auf die weitere Ausgestaltung der elektromotorischen Höhenverstellbarkeit der Endrinnen gerichtet. Diese können hiernach gleichzeitig oder individuell, d. h. unabhängig voneinander höhenverstellbar sein. In diesem Zusammenhang kann ein System von Positionsgebern vorgesehen sein. Eine Höhenverstellbarkeit der Endrinnen ist dann erforderlich, wenn zwischen den Endrinnen und den Führungsplatten keine Langrinnen angeordnet sind.

Gemäß den Merkmalen des Anspruchs 14 ist einem jeden der Paare von Montagepunkten eine horizontale Verstelleinrichtung zugeordnet. Diese ermöglicht eine Justierung in einer Horizontalebene und kann manuell betätigbar eingerichtet sein. Grundsätzlich kommt jedoch auch für diese Verstellung ein elektromotorischer Antrieb in Betracht. Diese Verstelleinrichtungen können vorteilhaft als modulartige Baugruppen ausgestaltet sein, die an einem Ende in einer sich vertikal erstreckenden, mit der Konsole der Endrinnenbaugruppe in Verbindung stehenden Leiste und an ihrem anderen Ende mit einem der genannten Montagepunkte in Wirkverbindung stehen. Das diesen Verstelleinrichtungen zugrundeliegende mechanische Prinzip ist als solches bekannt und wird an dieser Stelle nicht näher beschrieben.

Die konstruktive Ausgestaltung der genannten Montagepunkte kann grundsätzlich beliebig eingerichtet sein. Besonders vorteilhaft ist es entsprechend den Merkmalen des Anspruchs 15 jedoch, diese als Aufsteckdorne auszubilden, die mit entsprechenden, an den Endrinnen angebrachten Elementen zusammenwirken. Auf diese Weise ist eine einfache Montier- und Demontierbarkeit der Endrinnen gegeben.

Die Merkmale der Ansprüche 16 und 17 sind auf die weitere Ausgestaltung der Antriebe der Höhenverstellung gerichtet. Diese Antriebe werden jeweils durch Stellmotoren gebildet, die mit einer Steuerungseinrichtung in Verbindung stehen. Diese Steuerungseinrichtung kann an einem geeigneten Ort untergebracht sein und ermöglicht eine einfache zentralisiert angelegte Steuerung und damit Höheneinstellung der Montagepunkte bzw. Aufsteckdorne, beispielsweise durch individuelle Steuerung sämtlicher Stellmotoren. Die Stellmotoren sind beispielsweise als einfach montierbare bzw. demontierbare Baugruppen den genannten Montagepunkten zugeordnet und können jeweils ein Bestandteil der genannten ersten Baugruppen der Endrinnenbaugruppe sein. Zum Schutz gegenüber Umgebungseinflüssen jeglicher Art ist den Antrieben eine Abdeckung zugeordnet.

Entsprechend den Merkmalen des Anspruchs 18 können die Führungsplatten der Führungsplatteneinheit als Hohlstrukturen ausgebildet sein, welche der Führung eines Kühlmittels dient. Diese Hohlstruktur kann als flächenhaftes Netzwerk bestehend aus zur Führung des Kühlmittels, z. B. Wasser bestimmten Leitungselementen ausgebildet sein und den wesentlichen Teil der mit dem schmelzflüssigen Glas in Berührung tretenden Teile der Führungsplatte erfassen. Eine Kühlung dieser Art ist jedoch nicht auf die Führungsplatten beschränkt und kann grundsätzlich bei allen solchen, mit dem Glastropfen in Berührung gelangenden Teilen eingerichtet sein, bei sich ein Kühlungsbedürfnis ergibt. Durch die Einrichtung einer solchen Kühlung der Gleitbahnen kann insbesondere bei schweren Glastropfen eine übermäßige, den Tropfenlauf beeinträchtigende Aufheizung der Führungsplatten oder auch sonstiger Teile des Rinnensystems verhindert werden.

Entsprechend den Merkmalen der Ansprüche 19 und 20 ist die Steuerungseinrichtung zur Höheneinstellung der Endrinnen nach Maßgabe hinterlegter Werte, gegebenenfalls in Verbindung mit einer Memory-Funktion eingerichtet. Dies setzt zwar ein System mit Positionsgebern und eine entsprechende Datenbank voraus - es wird jedoch auch ein automatisiertes Anfahren der entsprechenden Höhenpositionen erreicht.

Der Anmeldungsgegenstand wurde vorstehend in Verbindung mit solchen Rinnensystemen erläutert, die aus einer Führungsplattenbaugruppe und einer Endrinnenbaugruppe bestehen. Er kann sinngemäß jedoch auch bei solchen, zusätzlich mit Langrinnen zwischen den Führungsplatten sowie den Endrinnen ausgerüsteten Rinnensystemen Anwendung finden.

Man erkennt anhand der vorstehenden Ausführungen, dass das erfindungsgemäße Rinnensystem eine besondere Ausgestaltung mit Hinblick auf einen raschen und kostengünstig darstellbaren Wechsel zwischen einem Einfach-, einem Doppel-, einem Dreifach- oder einem sonstigen Mehrfachformbetrieb und umgekehrt erfahren hat. Dies wird dadurch erreicht, dass eine Führungsplattenbaugruppe und gegebenenfalls eine Langrinnenbaugruppe jeweils in erste und zweite Baugruppen unterteilt sind, wobei im Falle einer Umrüstung die ersten Baugruppen am Maschinenrahmen in ihrer dortigen Montageposition verbleiben und lediglich die zweiten, als unmittelbare Träger von Führungsplatten bzw. Langrinnen konzipierten Baugruppen ausgetauscht werden. Zwischen den jeweiligen ersten und zweiten Baugruppen sind standardisierte Schnittstellen eingerichtet, welche durch definierte Einschiebe-, Aufsteckpositionen oder dergleichen eine beträchtliche Verminderung von ansonsten anfallenden Einricht- bzw. Justiertätigkeiten mit sich bringen.

Ein Ausführungsbeispiel der Erfindung wird im Folgenden unter Bezugnahme auf die beiliegenden Zeichnungen näher erläutert werden. Es zeigen:
- Fig. 1: eine perspektivische Darstellung einer dem Stand der Technik zuzuordnenden Führungsplattenbaugruppe für einen Dreifachtropfenbetrieb;
- Fig. 2: eine perspektivische Darstellung einer dem Stand der Technik zuzuordnenden Führungsplattenbaugruppe für einen Doppeltropfenbetrieb;
- Fig. 3: eine perspektivische Darstellung einer dem Stand der Technik zuzuordnenden Führungsplattenbaugruppe für einen Einfachtropfenbetrieb;
- Fig. 4: eine dem Stand der Technik zuzuordnende Seitenansicht einer Endrinnenhöhenverstellung in teilweiser Darstellung;
- Fig. 5: eine perspektivische Darstellung einer erfindungsgemäßen Führungsplattenbaugruppe für einen Dreifachtropfenbetrieb im Einbauzustand;
- Fig. 6: eine Ansicht einer Einzelheit VI der Fig. 5 in vergrößerter Darstellung;
- Fig. 7: eine Darstellung der Einzelheit gemäß Fig. 6 in einem teilweisen Horizontalschnitt VII - VII;
- Fig. 8: eine vergrößerte teilweise Darstellung einer Seitenansicht entsprechend einer Blickrichtung VIII der Fig. 5;
- Fig. 9: eine perspektivische Darstellung einer erfindungsgemäßen Endrinnenverstellung;
- Fig.10: eine Teildarstellung einer vergrößerten Einzelheit X der Fig. 9;
- Fig. 11: eine vergrößerte Teildarstellung des oberen Teils XI der Fig. 9;
- Fig. 12: eine vergrößerte Teildarstellung des Antriebs der erfindungsgemäßen Endrinnenverstellung in einem Axialschnitt;

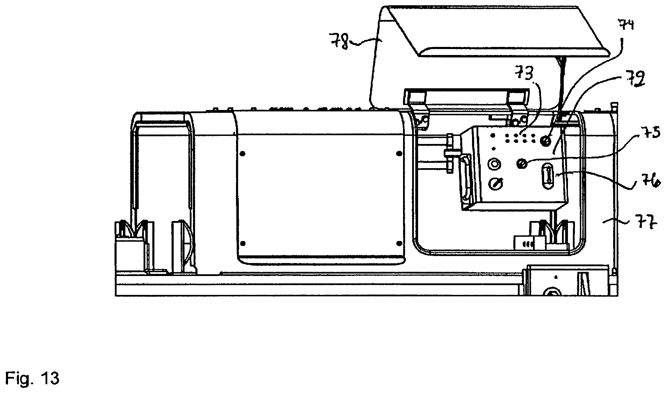

- Fig. 13: eine schematische Ansicht einer erfindungsgemäßen Steuerung der Endrinnenhöhenverstellung.

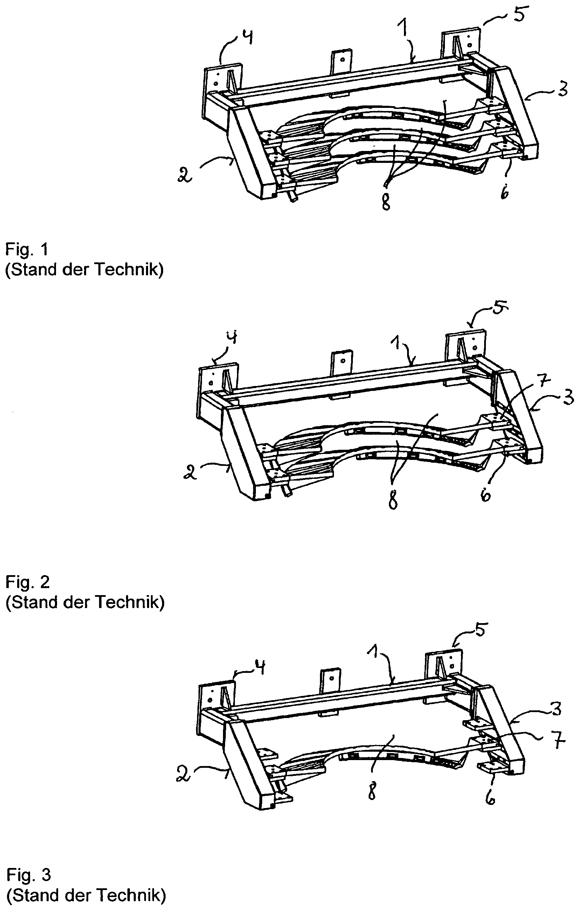

Zur Darstellung des Standes der Technik wird zunächst auf die Zeichnungsfiguren 1 bis 5 Bezug genommen, wobei anhand der Fig 1 bis 3 der herkömmliche Aufbau einer zur Halterung von Führungsplatten bestimmten Baugruppe als Teil des Rinnensystems einer I.S.-Maschine erläutert werden wird. Diese Baugruppen bestehen jeweils aus einer Basis 1, an deren beiden Enden Tragarme 2, 3 angebracht sind, wobei die Basis 1 über ebenfalls an ihren Enden angeordnete Montageplatten 4, 5 zur Befestigung an einem zeichnerisch nicht dargestellten Scoopbalken, somit am Maschinenrahmen einer Glasformmaschine eingerichtet ist.

Die Tragarme 2, 3 erstrecken sich in zueinander parallelen Ebenen senkrecht zu der Längserstreckung der Basis 1 und sind auf ihren einander zugekehrten Seiten mit Halteplatten 6 versehen auf denen unter Zwischenanordnung jeweils von Montagestücken 7 Führungsplatten 8 aufgelagert sind. In Abhängigkeit von einer Verwendung der Baugruppe für einen Einfach-, Doppel- oder Dreifachformbetrieb sind auf den Tragarmen 2, 3 eine (Fig. 3), zwei (Fig. 2) oder drei Führungsplatten 8 (Fig.1) übereinander und in Richtung auf die Basis 1 hin versetzt angeordnet.

Im Betrieb dieser Baugruppe werden von einem Strang schmelzflüssigen Glases abgetrennte Tropfen über eine, um eine vertikale Achse schwenkbare Scooprinne in Abhängigkeit von der Schwenkstellung der Scooprinne nacheinander den unterschiedlichen Rinnen der Führungsplatte / der Führungsplatten zugeleitet und über diesen nachgeordnete Rinnenelemente, z. B. jeweils einer Langrinne und eine sich anschließende Endrinne einer Form, insbesondere einer Vorform zugeführt, in der der eigentliche Formgebungsprozess beginnt.

Praktisch handelt es sich bei den Rinnen der Führungsplatte um in deren Gusskörper eingefräste Mulden, die zur Darstellung einer rinnenartigen, auf den genannten Tropfen ausgeübten Führungsfunktion eingerichtet sind.

Um einen optimalen Tropfenlauf und eine gut reproduzierbare Tropfenform zu erreichen, ist die Darstellung einer definierten Gleitbahn der Tropfen beim Übergang von der Scooprinne über die Rinnen bzw. die Mulden der Führungsplatte, die Langrinne und die Endrinne bis in die genannte Vorform von großer Bedeutung. Insbesondere muss ein bestimmter Auftreffwinkel des die Scooprinne verlassenden und auf die Rinne der Führungsplatte auftreffenden Tropfens eingestellt werden. Gleiches gilt für den Übergang von der Rinne der Führungsplatte auf die Langrinne und von der Langrinne auf die Endrinne. Dies wird durch Einstellung einer jeweiligen Überhöhung erreicht, nämlich des jeweils unteren Endes eines Führungselements gegenüber dem oberen Ende des sich in Abwärtsrichtung der Gleitbahn anschließenden Führungselements. Die Position der Langrinne gegenüber der Führungsplatte ist gleichermaßen einstellbar wie die Position der Langrinne gegenüber der an dem Maschinenrahmen gehaltenen, jedoch u. a. mit einer Vertikalverstellung ausgerüsteten Endrinne eingerichtet.

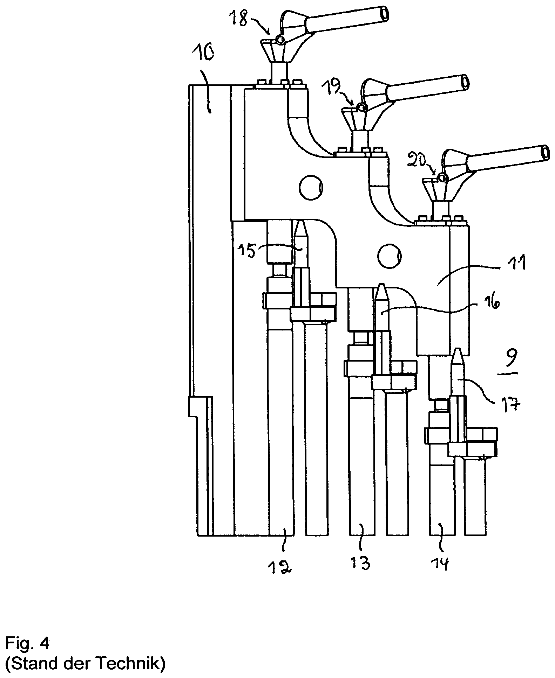

Fig. 4 zeigt ausschnittsweise eine Verstelleinheit 9 für die Vertikalverstellung der Endrinnen für einen Dreifachformbetrieb, die an einer Konsole 10 für eine Befestigung an einem Maschinenrahmen eingerichtet ist. Die Verstelleinheit 9 ist durch einen Ausleger 11 gekennzeichnet, in dem drei sich vertikal und parallel zueinander sowie zu der Konsole erstreckende doppelte Säulen 12, 13, 14 gelagert sind, deren Hubbewegung auf die Höhenposition von drei Aufsteckdornen 15, 16, 17 übertragbar ist, aufweichen die Endrinnen abgestützt sind. Die Säulen 12, 13, 14 sind über ein an ihren jeweiligen oberseitigen Enden angeschlossenes Winkelgetriebe 18, 19, 20 manuell zwecks Einstellung der Höhenposition der Aufsteckdorne 15, 16, 17 antreibbar. In Fig. 4 sind für diesen Fall lediglich die drei oberen Aufsteckdorne 15, 16, 17 dargestellt. Jede Langrinne ist jedoch mittels zweier vertikal beabstandet übereinander angeordneter Aufsteckdorne gehalten, wobei aus Gründen der zeichnerischen Übersichtlichkeit auf eine Darstellung der jeweils unteren Aufsteckdorne verzichtet worden ist.

Im Fall eines Wechsels von einem Einfach- auf einen Doppel bzw. einen Dreifachtropfenbetrieb oder auch umgekehrt ist es bei diesen vorstehend beschriebenen Ausführungsformen eines Rinnensystems erforderlich, die komplette Baueinheit bestehend aus Basis 1 nebst Tragarmen 2, 3 auszubauen und durch eine andere Einheit zu ersetzen. Gleiches gilt für die Verstelleinheit 9, die in diesem Fall ebenfalls einschließlich der sie tragenden Konsole 10 ausgetauscht werden muss. Beide Baugruppen, nämlich das Führungsplattensystem bestehend aus Basis, Tragarmen und aufgelagerten Führungsplatten sowie die genannte Verstelleinheit sind nur einheitlich handhabbar und dementsprechend nur als Baugruppen aus- und einbaubar. Dies ist in beiden Fällen unter anderem mit umfassenden Ausrichtarbeiten der Basis 1 sowie der Konsole 10 verbunden.

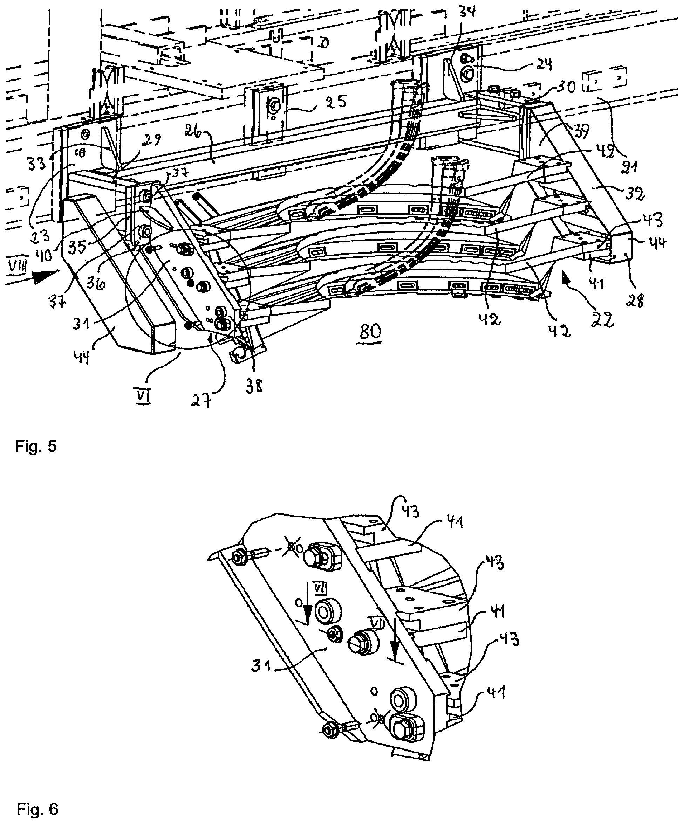

Zur Darstellung einer erfindungsgemäßen Führungsplattenbaugruppe 80 als Komponente, eines erfindungsgemäßen Rinnensystems wird im Folgenden auf die Darstellungen entsprechend den Figuren 5 bis 8 Bezug genommen.

Mit 21 ist in Fig. 5 gestrichelt ein Scoopbalken bezeichnet, der als Träger einer Führungsplattenbaugruppe 80 bestimmt ist und an dem mittels zweier Montageplatten 23, 24 die genannte Baugruppe gehalten ist. Mit 25 ist eine Zentrierplatte bezeichnet, die in gleicher Weise wie die Montageplatten 23, 24 mit einer sich horizontal erstreckenden Basis 26 in Verbindung steht und mittig zu dieser angeordnet ist. Die Zentrierplatte 25 dient in an sich bekannter Weise in Verbindung mit einer maschinenfesten Markierung der zentrierten, in einer definierten, konstruktionsbedingten Montageposition angelegten Befestigung der Basis 26 an dem Scoopbalken 21.

Die Führungsplattenbaugruppe 80 ist vertikal verstellbar an dem Scoopbalken 21 angeordnet, und zwar durch eine entsprechend einstellbare Halterung der Montageplatten 23, 24 an dem Scoopbalken. Dies kann konstruktiv beispielsweise durch zwei, an einer Kante des Scoopbalkens 21 abdrückbare Gewindestifte dargestellt werden. Die horizontale Ausrichtung der Führungsplattenbaugruppe 80 mit einem Tropfenverteiler wird mittels einer vertikalen Nut der Zentrierplatte 25 beibehalten, in der Stifte gleitend aufgenommen sind.

Ausgehend von beiden Enden der Basis 26 erstrecken sich in senkrechten, zueinander parallelen Ebenen Tragarme 27, 28, die jeweils aus einem ersten unmittelbar an den stirnseitigen Enden der Basis 26 angesetzten, sich horizontal erstreckenden Tragabschnitt 29, 30 und einem zweiten, sich ausgehend von dem ersten Tragabschnitt in Richtung von der Basis 26 fort geneigt erstreckenden Tragabschnitt 31, 32 bestehen. Die Montageplatten 23, 24 sind unmittelbar an Grundplatten 82 angehängt, die unmittelbar an dem Scoopbalken 21 befestigt sind. Durch sie ist eine definierte Montageposition dargestellt

Mit 33, 34 sind dreieckförmige, zwischen den Montageplatten 23, 24 und den zugekehrten Oberseiten der Basis 26 statisch wirksame Aussteifungsplatten bezeichnet.

Die Tragabschnitte 29, 30 enden an ihren, der Basis 26 abgekehrten Enden in Abschlussplatten 35, die sich parallel zu der Basis 26 und vertikal erstrecken und mit denen Anschlussplatten 36 jeweils mittels zweier Schrauben 37 verschraubt sind.

Die sich parallel zu den Abschlussplatten 35 erstreckenden Anschlussplatten 36 sind jeweils Teile der zweiten Tragabschnitte 31, 32 und stehen auf ihrer, den Abschlussplatten 35 abgekehrten Seite mit plattenartigen, sich in senkrechten Ebenen und parallel zueinander erstreckenden Haltearmen 38, 39 in Verbindung, wobei zwischen den Anschlussplatten 36 und wenigstens einer zugekehrten Seite eines Haltearmes dreieckförmige Aussteifungsplatten 40 statisch wirksam sind.

Die Führungsplatteneinheit 22 ist für einen Dreifachformbetrieb ausgelegt und es befindet sich dementsprechend auf den einander zugekehrten Seiten der Tragarme 27, 28, nämlich der Haltearme 38, 39 eine an sich bekannte Anordnung von sechs Halteplatten 41, auf denen die an den drei Führungsplatten 42 seitlich angeordneten Montagestücke 43 zwecks Fixierung der Führungsplatten 42 aufgelagert und in an sich bekannter Weise befestigt sind.

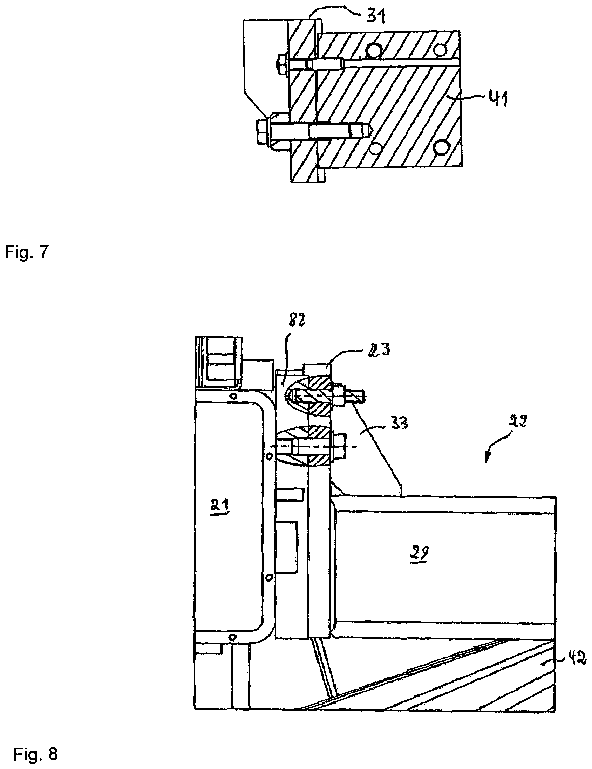

Mit 44 sind Abdeckbleche bezeichnet, durch die insbesondere die den Führungsplatten 42 abgekehrten Seiten der Haltearme 38, 39, welche, wie aus Fig. 7 ersichtlich ist, Verschraubungszwecken, hier u. a. der Halteplatten 41 dienen, abgedeckt sind.

Im Rahmen einer solchen Führungsplattenbaugruppe 80 wird eine erste unmittelbar mit dem Maschinenrahmen in Verbindung stehende Baugruppe durch die Basis 26 einschließlich der seitlich an diese angesetzten Tragabschnitte 31, 32 und eine zweite, als unmittelbarer Träger der der Führurigsplatten 42 definierte, einfach austauschbare Baugruppe durch die Führungsplatteneinheit 22 gebildet

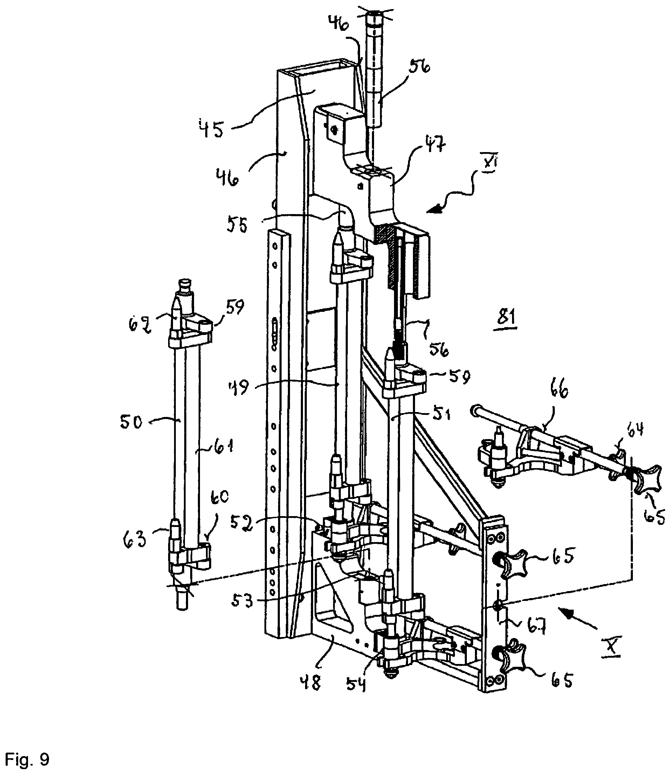

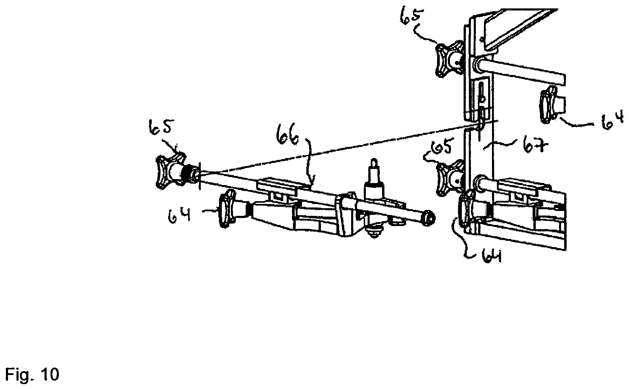

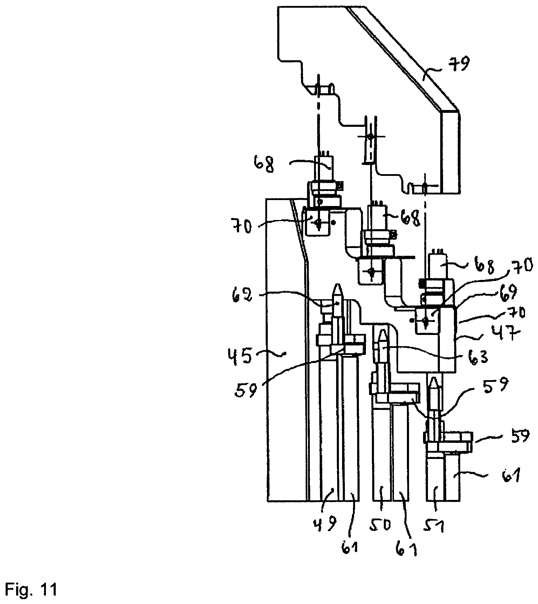

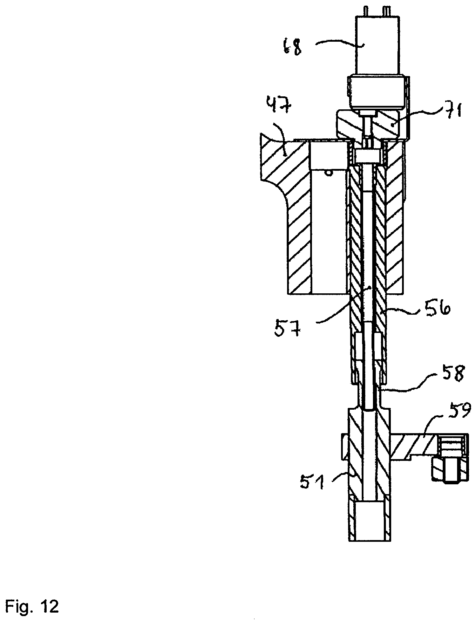

Es wird im Folgenden zur Beschreibung einer erfindungsgemäßen Endrinnenbaugruppe bzw. horizontalen Endrinnenverstellung 81 als Teil eines erfindungsgemäßen Rinnensystems auf die zeichnerischen Darstellungen der Figuren 9 bis 12 Bezug genommen.

Diese zeigen eine als Hohlkastenkonstruktion ausgebildete langestreckte Konsole 45, die zur vertikalen Befestigung an dem Maschinenrahmen einer I.S.-Maschine, insbesondere an einer horizontalen Tragstruktur bestimmt und eingerichtet ist. Die im Querschnitt im wesentlichen rechteckige Konsole 45 ist mit seitlichen, einander gegenüberliegenden Aussteifungsblechen 46 ausgerüstet.

An der Konsole 45 sind ein oberer Ausleger 47 und ein unterer Ausleger 48 befestigt, die sich in einer gemeinsamen vertikalen Ebene von der Konsole fort erstrecken.

Zwischen den Auslegern 47, 48 sind drei zueinander parallele säulenartige Tragelemente 49, 50, 51 in Aufnahmen 52, 53 und 54 des unteren Auslegers 48 und unter Zwischenanordnung von Wellen 55, 56 in dem oberen Ausleger 47 gelagert.

Die Wellen 55, 56 sind als Hohlwellen ausgebildet und dienen jeweils der Aufnahme einer Hubspindel 57, deren Antrieb im Folgenden noch beschrieben werden wird. Sie stehen an ihren unteren Enden mit den zugekehrten Enden der Tragelemente 49, 50, 51 in Verbindung, welche jeweils als Gewindemuffen 58 mit einem Innengewinde versehen sind, mit dem die Hubspindel 57 im Eingriff steht.

Jedes der Tragelemente 49, 50, 51 ist mit zwei, voneinander beabstandeten Stützelementen 59, 60 versehen, welche über eine Stange 61 miteinander in Verbindung stehen und welche jeweils als Träger von Aufsteckdornen 62, 63 eingerichtet ist. Diese Aufsteckdorne 62, 63 sind zum Zusammenwirken mit entsprechenden, an sich bekannten Gegenelementen einer Endrinne bestimmt, worauf hier nicht näher eingegangen wird.

Wesentlich insoweit ist, dass die Montagepositionen der Tragelemente 49, 50, 51 als Einsteckpositionen ausgebildet sind, welche eine einfache und schnelle Montage sowie Demontage ermöglichen.

Einer jeden der unteren Aufnahmen 52, 53, 54 sind manuell über Handräder 64, 65 zu betätigende Verstelleinrichtungen 66 zugeordnet, über welche eine Verstellung der Montageposition der Aufsteckdorne 62, 63 und damit der von diesen getragenen Endrinne in einer Horizontalebene möglich ist. Diese Verstelleinrichtungen 66 sind in einer vertikalen Leiste 67 gelagert, die an ihren unteren und oberen Enden mit der Konsole 45 in fester Verbindung steht. Die mechanische Wirkungsweise dieser Verstelleinrichtungen 66, deren in einer Horizontalebene wirksame Verstellbewegung auf die unteren Enden der Stangen 61 und damit die Aufsteckdorne 62, 63 übertragbar ist, ist an sich bekannt und wird an dieser Stelle nicht näher beschrieben.

Im Rahmen einer derartigen Endrinnenbaugruppe 81 bzw. horizontalen Endrinnenverstellung wird deren erste, zur unmittelbaren Befestigung an dem Maschinenrahmen bestimmte Baugruppe durch die Konsole 45 sowie die beiden Ausleger 47, 48 dargestellt, wohingegen die zweiten, unmittelbar als Träger einer Endrinne bestimmten, einfach austauschbaren Baugruppen durch die Tragelemente 49, 50, 41 dargestellt sind.

Der Antrieb für die Verstellbewegung in einer Vertikalrichtung wirkt auf die Hubspindel 57 ein und ist vorzugsweise als Getriebemotor 68 ausgebildet, der auf dem Ausleger 47 in koaxialer Anordnung zu der Hubspindel 57 angeordnet ist. Der Getriebemotor bzw. Stellmotor 68 ist in einer Trägereinheit 69 aufgenommen, die über seitlich angeformte Montageplatten 70 den Ausleger 47 seitlich beidseitig umgreift und mit diesem verschraubt ist. Ebenfalls in der Trägereinheit 69 aufgenommen ist ein mit einer Rändelung versehenes Handrad 71, welches ebenfalls mit der Hubspindel 57 in Verbindung steht und im Bedarfsfall auch eine manuell generierte Verstellbewegung ermöglicht. Der auf diese Weise konzipierte Antrieb steht über eine Steckkupplung mit der Hubspindel 57 in Verbindung, so dass im Bedarfsfall auch eine einfache Demontierbarkeit bzw. Montierbarkeit gegeben ist.

Sämtliche Getriebemotoren 69 stehen mit einer zweckmäßigerweise in der Nähe eines Tropfenverteilers der Glasformmaschine angeordneten Steuerungseinrichtung 72 in Wirkverbindung, welche mit einer optischen Anzeige 73, z. B. einer LED-Matrix zur visuell wahrnehmbaren Kennzeichnung der mittels zweier Drehknöpfe 74, 75 angewählten Position, nämlich der jeweiligen Langrinne und einen Schalter 76 zur Einleitung einer Abwärts- oder Aufwärtsbewegung ausgerüstet ist.

Die Steuerungseinrichtung 72 ist innerhalb eines Gehäuses 77 in der Nähe beispielsweise eines Tropfenverteilers der I.S.-Maschine vor Umgebungseinflüssen geschützt untergebracht, welches durch einen schwenkbaren Deckel 78 verschließbar ist.

Mit 79 ist eine Abdeckung bezeichnet, welche zum Aufstecken auf die Oberseiten der Ausleger 47 bestimmt ist, so dass die Getriebemotoren 68 geschützt angeordnet sind.

Eine weitere mögliche Ausgestaltung des Rinnensystems betrifft die Ausrüstung der Führungsplatten 42 mit einer integrierten Kühlung analog zu derjenigen, welche bereits bei den Scooprinnen bekannt ist, beispielsweise mittels einer Wasserkühlung oder auch mittels eines anderen Kühlmittels. Durch diese Maßnahme wird eine übermäßige Aufheizung der Führungsplatten beispielsweise bei schweren Tropfen verhindert und der Tropfenlauf insgesamt verbessert.

Man erkennt, dass ein durch eine vorstehend beschriebene horizontale Endrinnenbaugruppe 81 sowie eine erfindungsgemäße Führungsplattenbaugruppe 80 gekennzeichnetes Rinnensystem im Bedarfsfall soweit es um diese beiden Komponenten geht, einen einfach durchführbaren Wechsel beispielsweise von einem Einfachtropfen- auf einen Doppeltropfen- oder einen Dreifachtropfenbetrieb und umgekehrt ermöglicht.

Dies ist im Fall der Führungsplattenbaugruppe 80 deshalb möglich, weil bei einem solchen Wechsel deren erste Baugruppe, nämlich die Basis 26 sowie die sich unmittelbar an diese anschließenden ersten Tragabschnitte 29, 30 an dem Maschinenrahmen verbleiben können und ein Austausch auf die zweite Baugruppe, bestehend aus den genannten zweiten Tragabschnitten 31, 32 beschränkt ist, auf denen die Führungsplatten 42 angeordnet sind. Gegebenenfalls kommt auch ein Austausch lediglich von Teilen der zweiten Baugruppe in Betracht.

Dies ist im Fall der horizontalen Endrinnenbaugruppe 81 deshalb möglich, weil bei einem Wechsel deren erste Baugruppe, nämlich die Konsole 45 sowie die Ausleger 47, 48 an dem Maschinenrahmen verbleiben können und ein Austausch auf deren zweite Baugruppen, nämlich die Tragelemente 49, 50, 51 beschränkt ist. Die Ausleger 47, 48 sind mit Steckpositionen versehen, die für die Aufnahme der Tragelemente 49, 50, 51 eingerichtet sind. Eine weitere Erleichterung ist durch die Einrichtung einer elektrischen Höhenverstellbarkeit der Endrinnen gegeben.

In beiden Fällen entfallen somit Einricht- bzw. Justierarbeiten, die mit der Anbringung der genannten Basis bzw. der Konsole an dem Maschinenrahmen der I.S.-Maschine verbunden sind.

**Bezugszeichenliste:**

| | | | |
|---|---|---|---|
| 1. | Basis | 74. | Drehknopf |
| 2. | Tragarm | 75. | Drehknopf |
| 3. | Tragarm | 76. | Schalter |
| 4. | Montageplatte | 77. | Gehäuse |
| 5. | Montageplatte | 78. | Deckel |
| 6. | Halteplatte | 79. | Abdeckung |
| 7. | Montagestück | 80. | Führungsplattenbaugruppe |
| 8. | Führungsplatte | 81. | Endrinnenbaugruppe |
| 9. | Verstelleinheit | 82. | Grundplatte |
| 10. | Konsole | | |
| 11. | Ausleger | | |
| 12. | Säule | | |
| 13. | Säule | | |
| 14. | Säule | | |
| 15. | Aufsteckdorn | | |
| 16. | Aufsteckdorn | | |
| 17. | Aufsteckdorn | | |
| 18. | Winkelgetriebe | | |
| 19. | Winkelgetriebe | | |
| 20. | Winkelgetriebe | | |
| 21. | Scoopbalken | | |
| 22. | Führungsplatteneinheit | | |
| 23. | Montageplatte | | |
| 24. | Montageplatte | | |
| 25. | Zentrierplatte | | |
| 26. | Basis | | |
| 27. | Tragarm | | |
| 28. | Tragarm | | |
| 29. | Tragabschnitt | | |
| 30. | Tragabschnitt | | |
| 31. | Tragabschnitt | | |
| 32. | Tragabschnitt | | |
| 33. | Aussteifungsplatte | | |
| 34. | Aussteifungsplatte | | |
| 35. | Abschlussplatte | | |
| 36. | Anschlussplatte | | |
| 37. | Schraube | | |
| 38. | Haltearm | | |
| 39. | Haltearm | | |
| 40. | Aussteifungsplatte | | |
| 41. | Halteplatte | | |
| 42. | Führungsplatte | | |
| 43. | Montagestück | | |
| 44. | Abdeckblech | | |
| 45. | Konsole | | |
| 46. | Aussteifungsblech | | |
| 47. | Ausleger | | |
| 48. | Ausleger | | |
| 49. | Tragelement | | |
| 50. | Tragelement | | |
| 51. | Tragelement | | |
| 52. | Aufnahme | | |
| 53. | Aufnahme | | |
| 54. | Aufnahme | | |
| 55. | Welle | | |
| 56. | Welle | | |
| 57. | Hubspindel | | |
| 58. | Gewindemuffe | | |
| 59. | Stützelement | | |
| 60. | Stützelement | | |
| 61. | Stange | | |
| 62. | Aufsteckdorn | | |
| 63. | Aufsteckdorn | | |
| 64. | Handrad | | |
| 65. | Handrad | | |
| 66. | Verstelleinrichtung | | |
| 67. | Leiste | | |
| 68. | Stellmotor | | |
| 69. | Trägereinheit | | |
| 70. | Montageplatte | | |
| 71. | Handrad | | |
| 72. | Steuerungseinrichtung | | |
| 73. | Anzeige | | |

## Patentansprüche

1. Rinnensystem für eine Glasformmaschine, nämlich eine I.S.-Maschine mit Gleitbahnen für schmelzflüssige Glastropfen ausgehend von einer um eine vertikale Achse schwenkbaren Scooprinne zumindest über eine Führungsplattenbaugruppe (80) sowie eine Endrinnenbaugruppe (81) bis in eine Vorform, wobei die Führungsplattenbaugruppe (80) aus zumindest einer, mehrere, zur Führung jeweils eines Glastropfens bestimmte Rinnen aufweisenden Führungsplatte (42) besteht, wobei die Endrinnenbaugruppe (81) aus wenig-stens einer Endrinne besteht, wobei die Führungsplattenbaugruppe (80) und die Endrinnenbaugruppe am Maschinenrahmen der I.S.-Maschine befestigt sind, und wobei die Führungsplattenbaugruppe (80) und die Endrinnenbau-gruppe (81) jeweils aus einer ersten, unmittelbar an dem Maschinenrahmen befestigten und einer zweiten, als unmittelbarer Träger der Führungsplatte (42) bzw. der Endrinne eingerichteten Baugruppe bestehen, dadurch gekenn-zeichnet, dass die ersten Baugruppen mit einer standardisierten, zur Anbin-dung der zweiten Baugruppen bestimmten Schnittstelle versehen sind, dass die zweiten Baugruppen als einfach austauschbare, jeweils mit einer Schnittstelle zur Anbindung an die erste Baugruppe versehene und für einen Wechsel von einem Einfach-, einem Doppel- auf einen Dreifach- oder Mehrfachformbetrieb und umgekehrt bestimmte und eingerichtete Baugruppen ausgebildet sind, dass die zweite Baugruppe der Führungsplattenbaugruppe (80) aus einer Führungsplatteneinheit (22) besteht, die austauschbar an der ersten Baugrupppe der Führungsplattenbaugruppe (80) befestigt ist und aus zwei seitlichen Tragabschnitten (31, 32) besteht, zwischen denen wenigstens eine Führungsplatte (42) gehalten ist.

2. Rinnensystem nach Anspruch 1, **dadurch gekennzeichnet, dass** die erste Bau-gruppe der Führungsplattenbaugruppe (80) zumindest aus einer an einem Scoopbalken (21) befestigten Basis (26) besteht.

3. Rinnensystem nach einem der Ansprüche 1 oder 2, **dadurch gekennzeichnet, dass** die erste Baugruppe der Endrinnenbaugruppe (81) zumindest aus einer, an dem Maschinenrahmen befestigten Konsole (45) besteht, wobei an der Konsole (45) zumindest zwei, sich im wesentlichen senkrecht zu dieser erstreckende, zur Befestigung der zweiten Baugruppe der Endrinnenbau-gruppe (81) eingerichtete Ausleger (47, 48) mit Abstand übereinander angeordnet sind.

4. Rinnensystem nach einem der Ansprüche 1 bis 3,_**dadurch gekennzeichnet, dass** die Tragabschnitte (31, 32) an ihren, der Basis (26) zugekehrten Enden mit Anschlussplatten (36) versehen sind, dass an der Basis (26), sich senkrecht zu dieser erstreckend und im eingebauten Zustand den Tragabschnitten (31, 32) gegenüberliegend, Tragabschnitte (29, 30) angeordnet sind, dass die Tragabschnitte (29, 30) an ihren, der Basis (26) abgekehrten Enden mit Abschlussplatten (35) versehen sind, und dass eine einfach lösbare Verbindung zwischen der Führungsplatteneinheit (22) als zweiter Baugruppe der Führungsplattenbaugruppe (80) und deren erster, durch die Basis (26) sowie die Tragabschnitten (29, 30) dargestellten Baugruppe durch eine zwischen den Anschlussplatten (36) und den Abschlussplatten (35) wirksame Verschraubung dargestellt ist.

5. Rinnensystem nach einem der Ansprüche 1 bis 4,_**dadurch gekennzeichnet, dass** zumindest eine Montageseite der beiden Tragabschnitte (31, 32) der Führungsplatteneinheit (22) mit Abdeckblechen (44) geschützt angeordnet ist.

6. Rinnensystem nach einem der Ansprüche 1 bis 5, **dadurch gekennzeichnet, dass** die zweite Baugruppe der Endrinnenbaugruppe (81) aus wenigstens einem säulenartigen Tragelement (49, 50, 51) besteht, welches in definierten Positionen zwischen den beiden Auslegern (47, 48) der ersten Baugruppe der Endrinnenbaugruppe (81) einsetz- und fixierbar ist.

7. Rinnensystem nach Anspruch 6, **dadurch gekennzeichnet, dass** die genannten Positionen der Ausleger (47, 48) als Steckpositionen eingerichtet und nach Maßgabe der Darstellung eines Doppel-, eines Dreifach- oder eines Mehrfachformbetriebes positioniert sind.

8. Rinnensystem nach einem der Ansprüche 1 bis 7, **dadurch gekennzeichnet, dass** die Führungsplattenbaugruppe (80) höhenverstellbar am Maschinenrahmen der I.S.-Maschine angeordnet ist.

9. Rinnensystem nach einem der Ansprüche 6 bis 8,_**dadurch gekennzeichnet, dass** die Tragelemente (49, 50, 51) zur Verbindung mit den Endrinnen, insbesondere zur Darstellung zweier übereinander angeordneter Montagepunkte für eine Endrinne eingerichtet sind.

10. Rinnensystem nach Anspruch 9, **dadurch gekennzeichnet, dass** die Montagepunkte zur Darstellung einer Höhenverstellung der Position der jeweiligen Endrinne eingerichtet sind.

11. Rinnensystem nach einem der Ansprüche 3 bis 10, **dadurch gekennzeichnet, dass** der obere der beiden vertikalen Ausleger (47, 48) als Träger eines elektromotorischen Antriebs für die Höhenverstellung einer jeden der mehreren Endrinnen eingerichtet ist.

12. Rinnensystem nach Anspruch 11, **dadurch gekennzeichnet, dass** alle Endrinnen gleichzeitig elektromotorisch höhenverstellbar eingerichtet sind.

13. Rinnensystem nach Anspruch 11, **dadurch gekennzeichnet, dass** alle Endrinnen individuell elektromotorisch höhenverstellbar eingerichtet sind.

14. Rinnensystem nach einem der Ansprüche 9 bis 13, **gekennzeichnet durch** eine sich parallel zu der Konsole (45) erstreckende und an dieser befestigte Leiste (67), in der das jeweils eine Ende einer horizontalen Verstelleinrichtung (66) aufgenommen ist, deren anderes Ende mit einem der genannten Mon-tagepunkte in Wirkverbindung steht.

15. Rinnensystem nach einem der Ansprüche 9 bis 14, **dadurch gekennzeichnet, dass** die Montagepunkte durch Aufsteckdorne (62, 63) dargestellt sind, die zum Aufstecken von entsprechenden, mit der jeweiligen Endrinne in Verbin-dung stehenden Elementen eingerichtet sind.

16. Rinnensystem nach einem der Ansprüche 12 bis 15, **dadurch gekennzeichnet, dass** den motorischen, durch Stellmotoren (68) dargestellten Antrieben eine Steuerungseinrichtung (72) zugeordnet ist.

17. Rinnensystem nach einem der Ansprüche 12 bis 16, **dadurch gekennzeichnet, dass** den motorischen Antrieben eine Abdeckung (79) zugeordnet ist.

18. Rinnensystem nach einem der Ansprüche 1 bis 17, **dadurch gekennzeichnet, dass** die Führungsplatten (42) der Führungsplatteneinheit (22) als Hohlstruktur ausgebildet sind, welche zur Führung eines Kühlmittels eingerichtet ist.

19. Rinnensystem nach einem der Ansprüche 18 bis 20, **dadurch gekennzeichnet, dass** eine Höheneinstellbarkeit der Endrinne / der Endrinnen unter Mitwirkung der Steuerungseinrichtung (72) nach Maßgabe hinterlegter Werte eingerichtet ist.

20. Rinnensystem nach einem der Ansprüche 16 bis 19, **dadurch gekennzeichnet, dass** eine Höheneinstellbarkeit der Endrinne / der Endrinnen unter Mitwirkung der Steuerungseinrichtung (72) mit einem, eine Memory-Funktion umfassenden Speichersystem eingerichtet ist.

## Claims

1. Channel system for a glassware forming machine, namely an I.S. machine, with sliding paths for molten glass gobs extending from a scoop channel, which can be pivoted about a vertical axis, into a parison mould at least via a guide plate assembly (80) and an end channel assembly (81), wherein the guide plate assembly (80) consists of at least one guide plate (42) which has a plurality of channels intended for respectively guiding one glass gob, wherein the end channel assembly (81) consists of at least one end channel, wherein the guide plate assembly (80) and the end channel assembly are mounted on the machine frame of the I.S. machine, and wherein the guide plate assembly (80) and the end channel assembly (81) respectively consist of a first assembly, which is directly mounted on the machine frame, and a second assembly which is configured as a direct carrier of the guide plate (42) or the end channel, **characterised in that** the first assemblies are provided with a standardised interface intended for connecting the second assemblies, **in that** the second assemblies are designed as easily replaceable assemblies which are respectively provided with an interface for connection to the first assembly and intended and configured for a conversion from a single-mould operation, double-mould operation to a triple-mould or multi-mould operation and vice versa, **in that** the second assembly of the guide plate assembly (80) consists of a guide plate unit (22) which is replaceably mounted on the first assembly of the guide plate assembly (80) and consists of two lateral carrying sections (31, 32), between which at least one guide plate (42) is held.

2. Channel system as claimed in claim 1, **characterised in that** the first assembly of the guide plate assembly (80) consists at least of a base (26) which is mounted on a scoop beam (21).

3. Channel system as claimed in any one of claims 1 or 2, **characterised in that** the first assembly of the end channel assembly (81) consists at least of a console (45) which is mounted on the machine frame, wherein at least two extension arms (47, 48) which extend substantially perpendicularly to the console (45) and are configured for mounting the second assembly of the end channel assembly (81) are arranged on top of one another at a spaced interval on said console.

4. Channel system as claimed in any one of claims 1 to 3, **characterised in that** the carrying sections (31, 32) are provided with connecting plates (36) on their ends facing the base (26), **in that** carrying sections (29, 30), which extend perpendicularly to the base (26) and lie opposite the carrying sections (31, 32) in the installed state, are arranged on the base, **in that** the carrying sections (29, 30) are provided with end plates (35) on their ends facing away from the base (26), and **in that** an easily detachable connection between the guide plate unit (22) as a second assembly of the guide plate assembly (80) and its first assembly formed by the base (26) and the carrying sections (29, 30) is produced by means of a screw joint effective between the connecting plates (36) and the end plates (35).

5. Channel system as claimed in any one of claims 1 to 4, **characterised in that** at least one mounting side of the two carrying sections (31, 32) of the guide plate unit (22) is arranged so as to be protected by cover plates (44).

6. Channel system as claimed in any one of claims 1 to 5, **characterised in that** the second assembly of the end channel assembly (81) consists of at least one column-like carrying element (49, 50, 51) which can be inserted and fixed in defined positions between the two extension arms (47, 48) of the first assembly of the end channel assembly (81).

7. Channel system as claimed in claim 6, **characterised in that** said positions of the extension arms (47, 48) are configured as plug-in positions and are positioned in accordance with the embodiment of a double-mould operation, triple-mould operation or multi-mould operation.

8. Channel system as claimed in any one of claims 1 to 7, **characterised in that** the guide plate assembly (80) is arranged in a height-adjustable manner on the machine frame of the I.S. machine.

9. Channel system as claimed in any one of claims 6 to 8, **characterised in that** the carrying elements (49, 50, 51) are configured for connection to the end channels, in particular for producing two installation points for an end channel which are arranged one on top of the other.

10. Channel system as claimed in claim 9, **characterised in that** the installation points are configured for effecting a height adjustment of the position of the respective end channel.

11. Channel system as claimed in any one of claims 3 to 10, **characterised in that** the upper one of the two vertical extension arms (47, 48) is configured as a carrier of an electromotive drive for the height adjustment of each one of the plurality of end channels.

12. Channel system as claimed in claim 11, **characterised in that** all end channels are configured so as to be simultaneously height-adjustable in an electromotive manner.

13. Channel system as claimed in claim 11, **characterised in that** all of the end channels are configured so as to be individually height-adjustable in an electromotive manner.

14. Channel system as claimed in any one of claims 9 to 13, **characterised by** a rail (67) which extends in parallel with the console (45), is mounted thereon and in which one end of a horizontal adjusting device (66) is accommodated and the other end thereof is operatively connected to one of said installation points.

15. Channel system as claimed in any one of claims 9 to 14, **characterised in that** the installation points are formed by slip-on mandrels (62, 63) which are configured for attachment of corresponding elements connected to the respective end channel.

16. Channel system as claimed in any one of claims 12 to 15, **characterised in that** a control device (72) is allocated to the motor drives provided by servomotors (68).

17. Channel system as claimed in any one of claims 12 to 16, **characterised in that** a cover (79) is allocated to the motor drives.

18. Channel system as claimed in any one of claims 1 to 17, **characterised in that** the guide plates (42) of the guide plate unit (22) are formed as a hollow structure which is configured for guiding a coolant.

19. Channel system as claimed in any one of claims 18 to 20, **characterised in that** the height of the end channel(s) can be adjusted with the cooperation of the control device (72) in accordance with stored values.

20. Channel system as claimed in any one of claims 16 to 19, **characterised in that** the height of the end channel(s) can be adjusted with the cooperation of the control device (72) with a storage system comprising a memory function.

## Revendications

1. Système de rigoles pour une machine de moulage du verre, à savoir une machine IS (machine à section individuelle) avec des glissières pour des gouttes de verre en fusion partant d'un conduit collecteur pouvant pivoter autour d'un axe vertical au moins par l'intermédiaire d'un ensemble de plaques de guidage (80) et d'un ensemble de rigoles terminales (81) jusque dans une préforme, dans lequel l'ensemble de plaques de guidage (80) est constitué d'au moins une plaque de guidage (42) présentant plusieurs rigoles destinées à guider respectivement une goutte de verre, dans lequel l'ensemble de rigoles terminales (81) est constitué d'au moins une rigole terminale, dans lequel l'ensemble de plaques de guidage (80) et l'ensemble de rigoles terminales sont fixés au niveau du bâti de machine de la machine IS, et dans lequel l'ensemble de plaques de guidage (80) et l'ensemble de rigoles terminales (81) sont constitués respectivement d'un premier ensemble fixé directement au niveau du bâti de machine et d'un deuxième ensemble mis au point en tant que support direct de la plaque de guidage (42) ou de la rigole terminale, **caractérisé en ce que** les premiers ensembles sont pourvus d'une interface standardisée, destinée au rattachement des deuxièmes ensembles, que les deuxièmes ensembles sont réalisés en tant qu'ensembles aisément remplaçables, pourvus respectivement d'une interface destinée à être rattachée au premier ensemble et se destinant à et mis au point pour passer d'un mode de moulage simple, double à un mode de moulage triple ou multiple, et inversement, que le deuxième ensemble de l'ensemble de plaques de guidage (80) est constitué d'une unité de plaques de guidage (22), qui est fixée de manière interchangeable au niveau du premier ensemble de l'ensemble de plaques de guidage (80), et de deux sections de support (31, 32) latérales, entre lesquelles au moins une plaque de guidage (42) est maintenue.

2. Système de rigoles selon la revendication 1, **caractérisé en ce que** le premier ensemble de l'ensemble de plaques de guidage (80) est constitué d'au moins une base (26) fixée au niveau d'une poutre collectrice (21).

3. Système de rigoles selon l'une quelconque des revendications 1 ou 2, **caractérisé en ce que** le premier ensemble de l'ensemble de rigoles terminales (81) est constitué d'au moins une console (45) fixée au niveau du bâti de machine, dans lequel sont disposés au niveau de la console (45) au moins bras (47, 48) s'étendant sensiblement de manière perpendiculaire par rapport à celle-ci, mis au point pour fixer le deuxième ensemble de l'ensemble de rigoles terminales (81) à distance de manière superposée.

4. Système de rigoles selon l'une quelconque des revendications 1 à 3, **caractérisé en ce que** les sections de support (31, 32) sont pourvues au niveau de leurs extrémités tournées vers la base (26), de plaques de raccordement (36), que des sections de support (29, 30) sont disposées au niveau de la base (26), de manière à s'étendre de manière perpendiculaire par rapport à celle-ci et de manière à faire face, dans l'état monté, aux sections de support (31, 32), que les sections de support (29, 30) sont pourvues au niveau de leurs extrémités opposées à la base (26), de plaques de terminaison (35), et qu'une liaison aisément amovible entre l'unité de plaques de guidage (22) en tant que deuxième ensemble de l'ensemble de plaques de guidage (80) et son premier ensemble constitué par la base (26) ainsi que les sections de support (29, 30) est constitué par un vissage efficace entre les plaques de raccordement (36) et les plaques de terminaison (35).

5. Système de rigoles selon l'une quelconque des revendications 1 à 4, **caractérisé en ce qu'**au moins un côté de montage des deux sections de support (31, 32) de l'unité de plaques de guidage (22) est disposé de manière protégée avec des tôles de recouvrement (44).

6. Système de rigoles selon l'une quelconque des revendications 1 à 5, **caractérisé en ce que** le deuxième ensemble de l'ensemble de rigoles terminales (81) est constitué d'au moins un élément de support (49, 50, 51) de type colonne, lequel peut être inséré et bloqué dans des positions définies entre les deuxièmes bras (47, 48) du premier ensemble de l'ensemble de rigoles terminales (81).

7. Système de rigoles selon la revendication 6, **caractérisé en ce que** les positions évoquées des bras (47, 48) sont mises au point en tant que positions d'enfichage et sont positionnées conformément à la représentation d'un mode de moulage double, triple ou multiple.

8. Système de rigoles selon l'une quelconque des revendications 1 à 7, **caractérisé en ce que** l'ensemble de plaques de guidage (80) est disposé de manière à pouvoir être ajusté en hauteur au niveau du bâti de machine de la machine IS.

9. Système de rigoles selon la revendication 6 à 8, **caractérisé en ce que** les éléments de support (49, 50, 51) sont mis au point être reliée aux rigoles terminales en particulier pour constituer deux points de montage disposés de manière superposée pour une rigole terminale.

10. Système de rigoles selon la revendication 9, **caractérisé en ce que** les points de montage sont mis au point pour constituer un ajustement en hauteur de la position de la rigole terminale respective.

11. Système de rigoles selon l'une quelconque des revendications 3 à 10, **caractérisé en ce que** le bras le plus haut des deux bras (47, 48) verticaux est mis au point en tant que support d'un entraînement à moteur électrique pour l'ajustement en hauteur de chacune des nombreuses rigoles terminales.

12. Système de rigole selon la revendication 11, **caractérisé en ce que** toutes les rigoles terminales sont mises au point de manière ajustable en hauteur simultanément par un moteur électrique.

13. Système de rigoles selon la revendication 11, **caractérisé en ce que** toutes les rigoles terminales sont mises au point de manière ajustable en hauteur individuellement par un moteur électrique.

14. Système de rigoles selon l'une quelconque des revendications 9 à 13, **caractérisé par** une baguette (67) s'étendant de manière parallèle par rapport à la console (45) et fixée au niveau de celle-ci, dans laquelle une extrémité respectivement d'un dispositif d'ajustement (66) horizontal est logée, dont l'autre extrémité coopère avec un des points de montage mentionnés.

15. Système de rigoles selon l'une quelconque des revendications 9 à 14, **caractérisé en ce que** les points de montage sont constitués par des mandrins d'emboîtement (62, 63), qui sont mis au point pour emboîter des éléments correspondants, reliés à la rigole terminale respective.

16. Système de rigoles selon l'une quelconque des revendications 12 à 15, **caractérisé en ce qu'**un dispositif de commande (72) est associé aux entraînements motorisés, constitués par des moteurs de réglage (68).

17. Système de rigoles selon l'une quelconque des revendications 12 à 16, **caractérisé en ce qu'**un recouvrement (79) est associé aux entraînements motorisés.

18. Système de rigoles selon l'une quelconque des revendications 1 à 17, **caractérisé en ce que** les plaques de guidage (42) de l'unité de plaques de guidage (22) sont réalisées en tant que structure creuse, laquelle est mise au point pour guider un moyen de refroidissement.

19. Système de rigoles selon l'une quelconque des revendications 18 à 20, **caractérisé en ce qu'**une possibilité de réglage en hauteur de la/des rigoles terminales est mise au point en impliquant le dispositif de commande (72) conformément à des valeurs enregistrées.

20. Système de rigoles selon l'une quelconque des revendications 16 à 19, **caractérisé en ce qu'**une possibilité de réglage en hauteur de la/des rigoles terminales est mise au point en impliquant le dispositif de commande (72) avec un système de stockage comprenant une fonction mémoire.
